# EUROPEAN PATENT APPLICATION

(11) **EP 2 213 163 A1**
(43) Date of publication of application: **04.08.2010**
(21) Application number: 10151568.2
(22) Date of filing: 25.01.2010
(51) Int. Cl.: A01K 97/02

(54) **Bait Distributor**

(30) Priority: 02.02.2009 GB 0901664; 16.02.2009 GB 0902550; 14.04.2009 GB 0906365; 13.11.2009 GB 0919855
(71) Applicant: Pemberton, John, Shirebrook, Mansfield Notthingham Nottinghamshire NG20 8TW (GB)
(72) Inventor: Pemberton, John, Shirebrook, Mansfield Notthingham Nottinghamshire NG20 8TW (GB)
(74) Representative: Adamson Jones

(57) **Abstract**

A bait distributor (1) for distributing fishing bait comprises a bait cup (2), a weight (6), an arcuate rail (8) and a float (3). When attached to the end of a fishing pole via a coupling (9) which is freely mounted on the rail (8), the bait cup (2) is arranged to rotate in response to a small linear force from the user. This is achieved through the application of a turning force to the bait cup (2) by the weight (6), resulting in relative movement between the coupling (9) and the rail (8). Once a sufficient degree of rotation has been achieved, bait is distributed through the mouth of the bait cup (2).

## Description

This invention relates to a bait distributor for distributing fishing bait and in particular to improving the accuracy and usability of such a bait distributor.

A popular method of angling involves distributing fishing bait in a particular area of water and then using a fishing pole having a line, float and hook to attempt to catch fish that feed on the distributed bait. Anglers often wish to distribute the bait in an area of water that is situated a considerable distance, eg 20m away. Anglers would also like to distribute bait with greater accuracy than has hitherto been possible.

Conventionally bait is fired using a catapult towards the remote area of water in which the angler wishes to catch fish. However, this method is clearly rather wasteful, inaccurate and awkward. In addition it takes a considerable amount of practice to be able to competently use a catapult to distribute bait.

Another widely used method of distributing bait involves using an attachment for a fishing pole that comprises a container having the form of a cup. The angler fits the attachment to the end of a fishing pole, charges the container with bait and feeds the fishing pole out across the water until the container is situated over the remote area of water. The fishing pole is then rotated through 180 degrees so that the container is upturned and the bait is distributed into the water. Clearly, however, such attachments are very difficult to handle at large distances. It is therefore common for a large proportion of the bait to spill out of the container before the remote area of water is reached. In addition, if the angler uses a large amount of bait, the weight of the bait in the cup gives rise to large torsional stresses in the pole. This can cause the pole to break. Further, a large quantity of bait can make it difficult for an angler to support the weight of the bait when using a long pole. This may result in injury.

There has now been devised an improved bait distributor for distributing fishing bait which overcomes or substantially mitigates the above-mentioned and/or other disadvantages associated with the prior art.

According to the invention, there is provided a bait distributor for distributing fishing bait into a remote area of water, the bait distributor comprising a bait cup and an arcuate rail extending between points above and below the bait cup, the bait distributor being connected, in use, to a pole via a coupling mounted freely on the rail, such that the bait cup is rotatable from a first orientation, in which bait is held in the bait cup and the centre of mass of the bait distributor is located substantially directly above its centre of rotation, to a second orientation, in which the centre of mass of the bait distributor is located generally below its centre of rotation and bait is discharged from the bait cup.

The bait distributor according to this invention is advantageous principally because it does not require the angler to apply a twisting force to the pole in order to distribute the bait, nor does it require the angler to bear all of the weight of the bait himself. These advantages are particularly beneficial when using a long pole. The bait can be distributed in a convenient and controlled way, while reducing the risk of injury. The bait distributor also improves the accuracy with which bait can be distributed. It also reduces the likelihood of the pole breaking due to the reduced torsional forces applied in use. When feeding out the bait to the desired location, the bait distributor may be in contact with the water so that some of the weight of the bait distributor is borne by the surface of the water. This further reduces the risk of injury.

The bait cup is connected to the rail. In use, in the first orientation the bait cup is suspended, in an upright condition, from the tip of a pole. At this point the weight of the bait distributor gives rise to a frictional force between the rail and the coupling which acts to prevent relative movement. This frictional force is sufficient to prevent the coupling from moving on the rail. Accordingly the bait cup remains in the upright condition. When placed on water, however, the bait distributor experiences an upward force due to its buoyancy. This reduces the frictional force which acts to prevent movement of the coupling on the rail. As a result, the bait distributor enters a state of unstable equilibrium. At this stage the application of a small force to the bait distributor, either from the water or from the angler, will result in the displacement of the centre of mass of the bait distributor away from its position substantially above the centre of rotation. As the centre of mass is no longer aligned with the centre of rotation, a rotational force is applied to the bait distributor which is sufficient to overcome the reduced frictional force between the rail and coupling. This causes relative movement between the coupling and the rail and the bait distributor rotates.

When the bait cup has rotated sufficiently, bait is released. The rotation of the bait cup stops when either:
i) the centre of mass reaches a position substantially below the centre of rotation of the bait distributor, so that a substantial turning force is no longer present; or
ii) the bait cup reaches an orientation at which the surface of the water applies a sufficiently large reaction force to prevent further rotation.

In order to facilitate operation of the bait distributor, the bait distributor preferably comprises a weight. The weight is preferably connected to the bait cup by upper support arms which extend upwards from the bait cup. The upper support arms are long enough so that the turning force applied by the weight is sufficient to rotate the bait distributor about its centre of rotation. The weight is located substantially above but preferably slightly to one side of the centre of rotation of the bait distributor when the bait distributor is in an upright position. This may be achieved by attaching the weight to one side of the upper support arms. Positioning the weight slightly to one side of the centre of rotation is advantageous in that, as the weight is already located on one side of the centre of rotation of the bait distributor, only a small displacement of the weight, towards that side, is required to cause the bait cup to rotate. The weight is preferably formed of a metallic material, preferably lead, due to its high density. The weight may be coated in a layer of plastics material.

The upper support arms are preferably two arms, that are most preferably formed as a single component. The free end of each arm connects to the bait cup.

The bait cup comprises a cavity capable of retaining bait. The cup has an open mouth through which the bait can be distributed. The mouth may, in certain embodiments, be provided with a closure. The upper support arms preferably connect to the bait cup at points on the perimeter of its mouth. The ends of the arms are typically provided with formations that locate in holes close to the perimeter of the mouth of the bait cup. The bait cup may also be provided with further holes to mitigate the effect of suction forces between the opening of the bait cup and the surface of the water while the bait distributor is being retrieved.

The bait distributor preferably comprises a float to provide the required buoyancy. The float is typically connected to the underside of the bait cup, preferably using a threaded connection for ease of manufacture and ease of assembly. The float preferably comprises a ring and a base which are integrally formed. The base is in contact with the bait cup. The ring is located below the base and is hollow. The ring preferably comprises a connector projection for connection to one end of the rail. The purpose of the connector projection is to facilitate connection of the rail to the float. The connector projection may be downwardly depending from the ring.

The rail may be connected to the upper support arms, preferably on the other side of the upper support arms to the weight. The rail and coupling are preferably made of materials which facilitate relative movement. The rail may be made from a plastics material and the coupling made from metal. The coupling is preferably a ring. The ring is held captive on the rail. A ring is suitable for this purpose as it is of an appropriate shape. The coupling is prevented from further movement at the ends of the rail by the upper support arms and the connector projection respectively.

The rail, float, upper support arms and bait cup are preferably made from plastics material using conventional techniques. Plastics have cost advantages and can be moulded into the shapes required for these components. The coupling, however, is preferably made of metal for reasons of durability.

A preferred embodiment of the invention will now be described with reference to the accompanying drawings, in which
Figure 1 is a perspective view, from below and one side, of a bait distributor according to this invention;
Figure 2 is a view similar to Figure 1, but from the opposite side of the bait distributor; and
Figures 3(a)-(d) are schematic diagrams of the bait distributor, illustrating the manner in which it is used.

Referring to the Figures, a bait distributor according to this invention is generally designated 1.

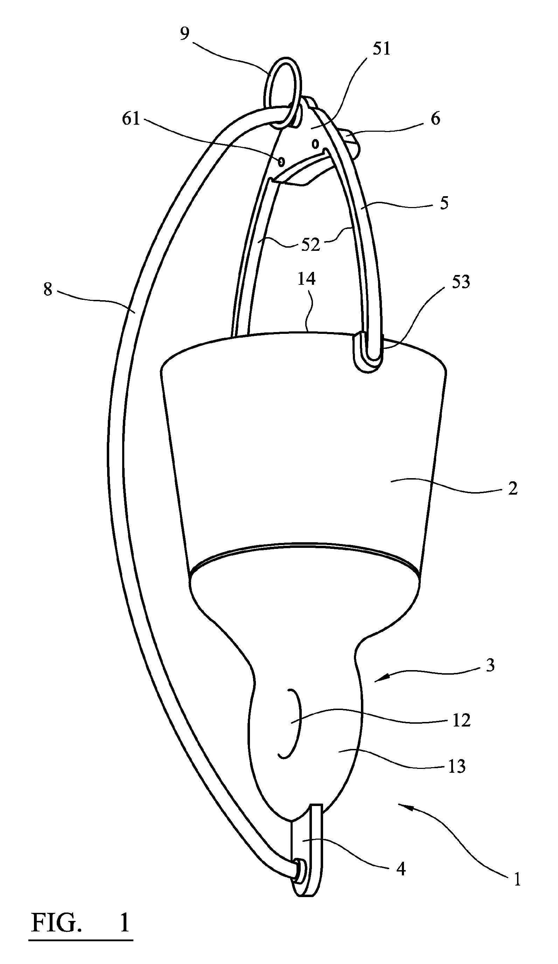

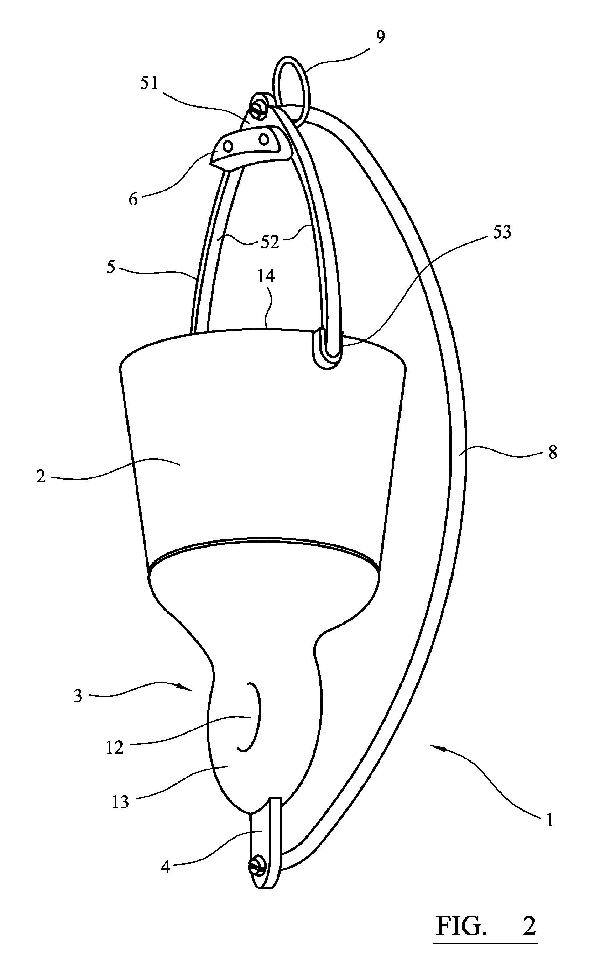

The bait distributor 1 comprises an upwardly (as viewed in Figures 1 and 2) open cup 2 with a hollow interior cavity 14 which is adapted for holding fishing bait. The bait distributor 1 further comprises a float 3 connected to the underside of the cup 2 by a threaded connection. The cup 2 and the float 3 are manufactured in plastics material by conventional methods. The float 3 comprises a ring 13 which has a central hole 12. The ring 13 has a connector projection 4 that depends downwardly from the ring 13. The connector projection 4 is substantially flat and lies in the same plane as the ring 13.

The cup 2 is suspended from an upper support 5, substantially of inverted V-shape, which is formed in plastics material and comprises a generally triangular plate 51 with two integrally formed arms 52. The lower ends of the arms 52 are connected to corresponding openings at diametrically opposite points at the upper perimeter of the cup 2 by means of integrally-formed, short and inwardly-directed split pins 53 at the bottom end of each arm 52. The split halves of each split pin 53 are sufficiently flexible to permit insertion of the pin 53 into the opening, but the resilience of the split pin 53 causes it to revert to its rest configuration once fully inserted, so that the pin 53 is captivated in the opening.

A weight 6, of lead encapsulated in plastics material, is attached to one side of the plate 51 by means of pins 61 that locate in holes in the plate 51. The ring 13, the connector projection 4 and the support 5 all lie in substantially the same plane, which passes through the centre of the cup 2.

Also provided is a rail 8 which is formed in plastics material and is substantially bow-shaped. The rail 8 links the plate 51 and the connector projection 4. The rail 8 connects to the plate 51 on the opposite side of the plate 51 to the weight 6. The ends of the rail 8 are formed into split pins that engage in openings in the plate 51 and connector projection 4 in a similar manner to engagement of the arms 52 with the cup 2. A metal sliding ring 9 is mounted for sliding movement along the rail 8.

In use, in a typical pole fishing configuration, the cup 2 is filled with the required quantity of bait, and the bait distributor 1 is attached to the tip of a fishing pole by connection of the metal ring 9 to the pole elastic that typically extends through the tip sections of a fishing pole. The pole elastic typically extends along the axis of the tip sections of a pole and out of the end of the tip to a length, when unstretched, of approximately 10cm.

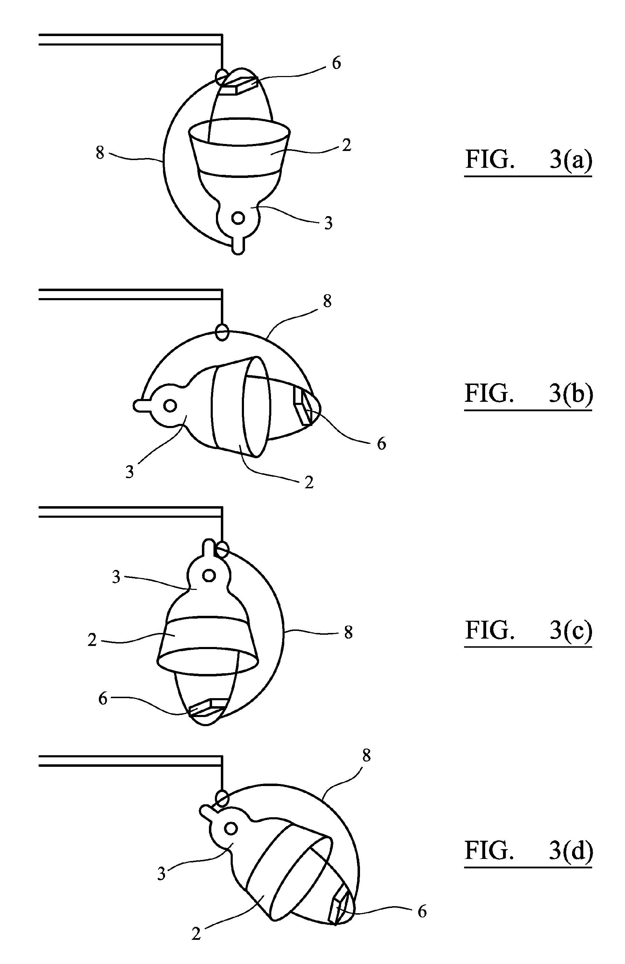

At this point the bait distributor 1 is in an upright position (the starting position). This upright position is shown in Figure 3(a). The angler then lowers the bait distributor onto the surface of the water so that the surface bears some but not all of the weight of the bait distributor. The angler then feeds out the pole until its tip (and hence the suspended bait distributor 1) reaches the point at which it is desired to distribute the bait. The angler then allows the full weight of the bait distributor to be taken by the surface of the water. At this point, with the weight 6 positioned approximately in the top dead centre position, directly above the float 3, the bait distributor 1 is in a state of unstable equilibrium. A slight forward nudge of the pole by the angler or a small force from the surface of the water, causes the weight 6 to move forward. As the weight 6 is then no longer directly above the float 3, the weight 6 falls under the influence of gravity, causing the bait distributor 1 to invert, as shown in Figures 3(a) and 3(b). Figure 3(b) shows the bait distributor 1 after it has rotated by 90 degrees. The bait distributor 1 rotates in the direction in which the weight 6 projects from the support plate 51. By this point the metal sliding ring 9 has slid along the rail 8 to a point which is roughly mid-way along the length of the rail 8. The bait distributor 1 continues to rotate until it has rotated roughly 180 degrees from the starting position. This position is shown in Figure 3(c). By this point the metal sliding ring 9 has slid to the end of the rail 8. As the cup 2 is inverted, all the bait in the cup 2 passes into the water.

The bait distributor 1 is then retrieved by raising the pole so that the inverted bait distributor 1 is lifted from the water, and the pole drawn back by the angler in the normal way. The cup 2 may be provided with small openings (not shown in the Figures) to prevent the creation of any suction force between the inverted cup 2 and the water, and so facilitate lifting of the bait distributor 1 from the water. After retrieval, the bait distributor 1 is disengaged from the pole elastic and replaced by a pole fishing rig that is then fed out in conventional manner to the area of water into which the bait has been distributed. Alternatively the tip section of the pole is replaced by a different tip section which comprises a fishing rig.

## Claims

1. A bait distributor for distributing fishing bait into a remote area of water, the bait distributor comprising a bait cup and an arcuate rail extending between points above and below the bait cup, the bait distributor being connected, in use, to a pole via a coupling mounted freely on the rail, such that the bait cup is rotatable from a first orientation, in which bait is held in the bait cup and the centre of mass of the bait distributor is located substantially directly above its centre of rotation, to a second orientation, in which the centre of mass of the bait distributor is located generally below its centre of rotation and bait is discharged from the bait cup.

2. A bait distributor as claimed in Claim 1, wherein the bait distributor comprises a weight that is located to one side of the centre of rotation of the bait distributor.

3. A bait distributor as claimed in Claim 2, wherein the weight is connected to the bait cup via upper support arms.

4. A bait distributor as claimed in Claim 3, wherein the weight is connected to one side of the upper support arms.

5. A bait distributor as claimed in any preceding claim, wherein the bait cup is in a fixed relationship with the rail.

6. A bait distributor as claimed in Claim 3 or Claim 4, wherein the rail is connected to the upper support arms.

7. A bait distributor as claimed in Claim 6, wherein the rail is connected to the other side of the upper support arms to the weight.

8. A bait distributor as claimed in any preceding claim, wherein the bait cup is connected to a float.

9. A bait distributor as claimed in Claim 8, wherein the float comprises a ring and a base.

10. A bait distributor as claimed in either of Claims 9 and 10, wherein the ring is hollow.

11. A bait distributor as claimed in any of Claims 8 to 10, wherein the float is connected to the rail.

12. A bait distributor as claimed in any of Claims 8 to 11, wherein the ring comprises a connector projection that depends downwardly from the ring and the rail is connected to the connector projection.

13. A bait distributor as claimed in Claim 3, wherein the upper support arms are connected to the perimeter of the bait cup.

14. A bait distributor as claimed in any preceding claim, wherein the coupling comprises a ring that is held captive on the rail.
